**Europäisches Patentamt**

**European Patent Office**

**Office européen des brevets**

(11) Veröffentlichungsnummer: **0 128 539**
**A2**

(12) ## EUROPÄISCHE PATENTANMELDUNG

(21) Anmeldenummer: **84106521.2**

(22) Anmeldetag: **07.06.84**

(51) Int. Cl.³: **F 02 B 75/04**, F 02 B 19/06, F 02 B 41/00

(30) Priorität: **13.06.83 NL 8302099**

(43) Veröffentlichungstag der Anmeldung: **19.12.84** Patentblatt 84/51

(84) Benannte Vertragsstaaten: **AT BE CH DE FR GB IT LI LU NL SE**

(71) Anmelder: **Schyma, Michael, Dr.-Ing., Luisenstrasse 98, D-5110 Alsdorf (DE)**
Anmelder: **Vandendries, Joseph Marie René Ghislain, Hazelaarlaan 6, NL-4645 JA Putte (NB) (NL)**

(72) Erfinder: **Schyma, Michael, Dr.-Ing., Luisenstrasse 98, D-5110 Alsdorf (DE)**
Erfinder: **Vandendries, Joseph Marie René Ghislain, Hazelaarlaan 6, NL-4645 JA Putte (NB) (NL)**

(74) Vertreter: **Liermann, Manfred, Josef-Schregel-Strasse 19, D-5160 Düren (DE)**

(54) **Viertaktarbeitsverfahren für den Betrieb eines Verbrennungsmotors mit Hilfskolben und Motor hierzu.**

(57) Die Erfindung betrifft ein Arbeitsverfahren für einen Viertaktverbrennungsmotor mit einem mit der Kurbelwelle in üblicher Weise verbundenen Kolben und einem beweglichen Hilfskolben hierzu, dessen Betrieb die bekannten vier Takte Expansion, Ausstoßen, Ansaugen und Kompression umfaßt. Bei bekannten Motoren dieser Art, die mit Hilfskolben betrieben werden, wird von Kolben und Hilfskolben der Kompressionsraum eingeschlossen und ggfls. über die obere Totpunktlage des Kolbens in konstanter Größe mit abwärts geführt, wobei in oberer Totpunktlage bereits die Zündung erfolgen kann. Hierdurch wird ein günstigerer Drehwinkel an der Kurbelwelle und damit ein besseres Drehmoment erreicht. Solche Motoren erzeugen jedoch stark umweltbelastende Abgase und arbeiten mit einem schlechten Wirkungsgrad, so daß trotz der vorgeschlagenen Maßnahmen Drehmoment und Leistung sowie Verbrauch und Schadstoffausstoß in den Abgasen ungünstige Werte aufweisen. Dies kann bei Zugrundelegung des beschriebenen bekannten Viertaktarbeitsverfahrens verbessert werden dadurch, daß am Ende der Ausstoßphase und spätestens im oberen Totpunkt des Hauptkolbens der Kompressionsraum vom Hilfskolben wenigstens angenähert zu Null gemacht und während der nachfolgenden Ansaugphase bis spätestens zum unteren Totpunkt des Hauptkolbens maximiert wird, wobei bei nachfolgender Kompressionsphase im oberen Totpunkt des Hauptkolbens dieser mit dem Hilfskolben einen Kompressionsraum einschließt, der während des nachfolgenden Abwärtshubes bis zu einem gewünschten Drehwinkel der Kurbelwelle rasch bis auf eine gewünschte Größe verkleinert wird, bevor die Zündung erfolgt.

## Viertaktarbeitsverfahren für den Betrieb eines Verbrennungsmotors mit Hilfskolben und Motor hierzu

Die Erfindung betrifft ein Viertaktarbeitsverfahren nach dem Gattungsbegriff des Hauptanspruchs sowie einen Kolbenmotor zur Durchführung dieses Verfahrens.

Verfahren der gattungsgemäßen Art sowie Kolbenmotoren zur Durchführung solcher Verfahren sind bekannt geworden beispielsweise mit der US-PS 2,018,944. Das dort betriebene Verfahren unter Anwendung des dort beschriebenen Motors erreicht vorteilhafterweise gegenüber herkömmlichen Motoren ein verbessertes Drehmoment des Motors, wobei jedoch der Wirkungsgrad des Motors relativ schlecht und der Schadstoffausstoß groß ist. Dies liegt daran, daß bei einem Ladungswechsel des Motors relativ große Restgasmengen im Motor verbleiben, die nicht ausgespült werden können. Darüber hinaus ist ein solcher Motor nicht für den Einsatz mit unterschiedlichen Betriebsstoffen geeignet. Die Zwangssteuerung des Hilfskolbens macht jedoch bereits möglich, daß der Hilfskolben nach dem Kompressionshub des Hauptkolbens diesem abwärts folgt unter Beibehaltung der Größe des in oberer Totpunktlage erreichten Kompressionsraumes, so daß dann eine Zündung bei einem gewünschten günstigen Kurbelwinkel erfolgen kann.

Eine ähnliche Einrichtung, allerdings zur Durchführung eines Zweitaktarbeitsverfahrens, ist bekannt geworden mit der GB-PS 1 516 982. Bei dieser Einrichtung werden mit dem Hilfskolben die Überströmkanäle geschlossen und geöffnet und es wird nach erfolgter Zündung bis zur Erreichung eines maximalen Gasdruckes der Hilfskolben dem Hauptkolben auf seinem Abwärts-Arbeitshub nachgeführt, was hierbei nachteiligerweise gegen die Explosionskraft geschehen muß. Auch hier tritt ein etwas verbessertes Drehmoment auf, aber es bleibt auch hier bei den stark schadstoffhaltigen Abgasen, wobei gleichzeitig ein solcher Motor nicht für unterschiedliche Treibstoffarten verwendbar ist.

Der Erfindung liegt somit die Aufgabe zugrunde ein Arbeitsverfahren für den Betrieb eines Viertaktmotors mit Hilfskolben vorzuschlagen, mit dem es möglich wird, in einem solchen Motor Treibstoffe unterschiedlichster Qualität einschl. Feststoffen (Kohlenstaub) bei sparsamstem Verbrauch zu verwenden und gleichzeitig bei niedriger Drehzahl ein großes Drehmoment zu erzeugen, wobei dennoch ein umweltfreundlicheres Abgas erreicht werden soll.

Eine weitere Aufgabe der Erfindung liegt darin, einen Motor zur Durchführung eines solchen Verfahrens vorzuschlagen.

Erfindungsgemäß ist eine solche Aufgabe bei einem Verfahren der eingangs beschriebenen Art dadurch gelöst, daß am Ende der Ausstoßphase und spätestens im oberen Totpunkt des Hauptkolbens der Kompressionsraum vom Hilfskolben wenigstens angenähert zu Null gemacht und während der nachfolgenden Ansaugphase bis spätestens zum unteren Totpunkt des Hauptkolbens maximiert wird, wobei bei nachfolgender Kompressionsphase im oberen Totpunkt des Hauptkolbens dieser mit dem Hilfskolben einen Kompressionsraum einschließt, der während des nachfolgenden Abwärtshubes bis zu einem gewünschten Drehwinkel der Kurbelwelle rasch bis auf eine gewünschte Größe verkleinert wird, bevor die Zündung erfolgt. Diese Minimierung des Kompressionsraumes während der Ausstoßphase bis mindestens angenähert Null, treibt alle verbrannten Restgase aus und sorgt daher für eine restgasfreie Neufüllung. Allein hierdurch wird der Schadstoffgehalt der Auspuffgase erheblich reduziert. Mit der nachfolgenden Ansaugphase kann durch die entgegengesetzte Bewegung des Hilfskolbens der insgesamt füllbare Zylinderraum vergrößert werden, wodurch eine vollständigere Füllung erreicht wird. Der nachfolgende Kompressionshub des Hauptkolbens kann gegen einen relativ großen Kompressionsraum bis zum oberen Totpunkt des Hauptkolbens erfolgen, so daß das unerwünschte Gegendrehmoment aus der Kompressionsarbeit klein gehalten werden kann. Bei Überschreiten der oberen Totpunktlage des Hauptkolbens wirkt sich der Kompressionsdruck wieder in gewünschter Drehrichtung antreibend aus. Es wird nunmehr in dieser Situation über den Hilfskolben der Kompressionsraum rasch verkleinert und damit die Kompression erhöht, was jedoch unschädlich ist, da diese in gewünschter Drehrichtung auf den Hauptkolben wirkt. Zur raschen Verkleinerung des Kompressionsraumes läuft der Hilfskolben schneller als der Hauptkolben hinter diesem her. Die Geschwindigkeiten sind so aufeinander abgestimmt, daß nun in einer gewünschten Drehwinkellage der Kurbelwelle ein Kompressionsraum gewünschter Größe und damit eine gewünschte Kompression erreicht ist und nun die Zündung erfolgt während der Hilfskolben stillsteht. Hierdurch wird ein größtmögliches Drehmoment gewährleistet. Gleichzeitig wird es möglich durch den anfänglich großen Kompressionsraum, der dann rasch verkleinert wird, beliebige Brennstoffe einschl. Feststoffen, wie z.B. Kohlenstaub, zu verwenden. Der anfangs recht große Kompressionsraum verhindert mit Sicherheit z.B. eine Selbstzündung des Treibstoffgemisches in unerwünschten Drehwinkellagen der Kurbelwelle. Mit der beschriebenen Variation des Kompressionsraumes, nämlich der Minimierung des Kompressionsraumes bis nahezu Null mit anschließender Maximierung des Kompressionsraumes und nachfolgender Reduzierung eines Kompressionsraumes mit anschließender Verschiebung des reduzierten Kompressionsraumes bei gleichzeitiger rascher weiterer Reduzierung und unmittelbar nachfolgender Zündung, wird die eingangs gestellte Aufgabe vollständig gelöst.

Eine weitere Aufgabe der Erfindung liegt darin, einen Kolbenmotor zur Durchführung des erfindungsgemäßen Verfahrens vorzuschlagen.

Ein Kolbenmotor, im wesentlichen bestehend aus mindestens einem Zylinder mit einem darin bewegbaren Hauptkolben, einer Kurbelwelle und einer zwischen Hauptkolben und Kurbelwelle angeordneten Pleuelstange, wobei in einem Verlängerungsteil des Zylinders ein von einem Mechanismus abhängig von der Kurbelwellenlage gesteuerter Hilfskolben an der von der Kurbelwelle abgekehrten Seite des Hauptkolbens angeordnet ist, zur Bildung eines Verbrennungsraumes zwischen beiden Kolben, der in Verbindung mit einer Ein- bzw. Auslaßöffnung für die Zu- bzw. Abfuhr eines Brennmediums bzw. Abgases steht, löst diese Aufgabe dadurch, daß der Steuermechanismus besteht aus einer in geeigneter Übersetzung zur Kurbelwelle und von dieser angetriebenen Nockenwelle mit je Hilfskolben einem Nocken, welcher zusammenarbeitet mit einem gabelförmigen Nockenfolger, wobei Nocken und Gabel je eine sich wenigstens angenähert radial erstreckende Anschlagfläche aufweisen. Ein solcher Mechanismus des Motors erlaubt nun dem Hilfskolben die notwendige Bewegung und beschleunigte Bewegung präzise weiterzugeben, wobei dennoch der Hilfskolben präzise relativ zum Hauptkolben geführt ist. Gleichzeitig wird es möglich, aufgrund der besonderen und definierten Form des Nockens und der Gabel den bei der Verbrennung oder Explosion auf den Hilfskolben einwirkenden Druck sicher und ohne nennenswerten Leistungsverlust aufzufangen.

Weitere Ausgestaltungen dieser Einrichtung sind in den Unteransprüchen 3 bis 7 beschrieben. Insbesondere nach der Lehre des Anspruchs 3 wird die erfindungsgemäße Ausbildung von Nocken und Nockenfolger auch für die Betätigung der Ventile bei ventilgesteuerten Motoren (mit oder ohne Hilfskolben) beschrieben. Hierdurch können vorteilhafterweise die bisher nötigen großen Ventilüberschneidungszeiten deutlich verringert werden, wodurch der Wirkungsgrad des Motors verbessert wird. Weiter wird die Zusammensetzung des brennbaren Gemisches verbessert und als Folge der Schadstoffanteil der verbrannten Gase reduziert.

Die Erfindung soll nun, unter Bezug auf die beigefügten Zeichnungen, näher erläutert werden.

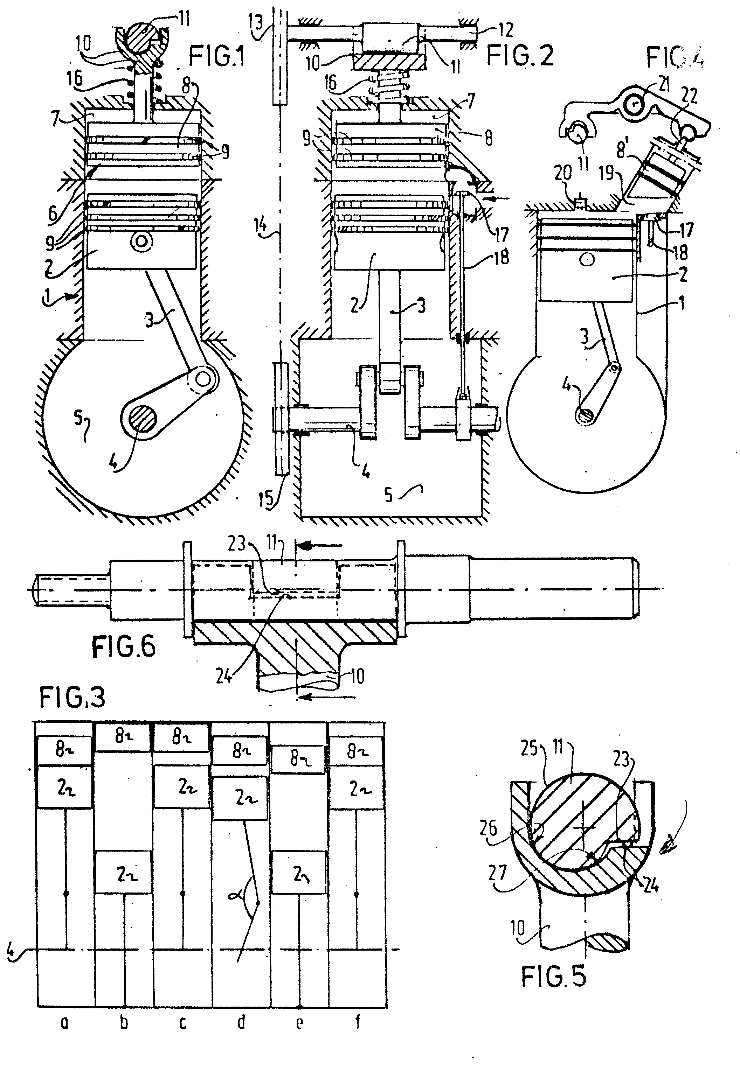

Es zeigen:     Figur 1    Längsschnitt durch eine erste Ausführungsform eines erfindungsgemäßen Motors

                        Figur 2    Längsschnitt durch den Motor nach Figur 1 jedoch um 90° geschwenkt.

                        Figur 3    Diagramm der einzelnen Verfahrensschritte des erfindungsgemäßen Motors

                        Figur 4    Längsschnitt ähnlich Figur 1, jedoch in abgewandelter Form des Motors

                        Figuren 5 und 6    Axialansicht und Seitenansicht des gabelförmigen Nockenfolgeteils mit der Nockenwelle

                        Figur 7    Ansicht wie Figur 5 jedoch mit versetztem Gabelschaft und veränderten radialen Flächen

In den Zeichnungen sind jeweils gleiche Teile mit gleichen

Bezugszeichen versehen.

In einem Zylinder 1 ist ein Hauptkolben 2 angeordnet, der sich in bekannter Weise im Zylinder 1 auf und ab bewegen kann. Kolben 2 ist mit einer Pleuelstange 3 mit einer Kurbelwelle 4 des Motors verbunden. Der Zylinder 1 ist in üblicher Weise auf einem Kurbelgehäuse 5 des Motors aufmontiert. Auf der der Kurbelwelle 4 abgewandten Seite des Hauptkolbens 2 ist der Zylinder 1 mit einem Hilfskolben 8 ausgerüstet. Ähnlich wie der Hauptkolben 2 ist auch der Hilfskolben 8 mit Kolbenringen 9 ausgerüstet. Zwischen den beiden Kolben 2 und 8 ist ein Verbrennungsraum 6 gebildet.

Der Hilfskolben 8 ist an seiner Oberseite ausgerüstet mit einer Gabel 10, die starr mit dem Hilfskolben 8 befestigt ist, wobei oberhalb der Gabel 10 ein Nocken 11 drehbar montiert ist. Der Nocken 11 ist als Teil einer Welle 12 ausgebildet, die im Motorgehäuse gelagert ist und an einer Seite mit einem Zahnrad 13 ausgestattet ist. Zahnrad 13 ist mittels eines endlosen Elementes 14 (vorzugsweise eine Kette) mit einem Zahnrad 15 verbunden, welches seinerseits mit einem Lagerzapfen der Kurbelwelle 4 verbunden ist. Eine Druckfeder 16 zwischen der Oberseite des Raumes 7 und der Unterseite der Gabel 10 sorgt für einen ständigen Kontakt zwischen der Gabel 10 und dem Nocken 11.

Die Betriebsweise des in den Figuren 1 und 2 dargestellten Motors soll unter Zuhilfenahme der Figur 3 erläutert werden.
Ausgehend von der Position a, in welcher der Hauptkolben 2 am Hilfskolben 8 gerade anliegt, bewegt sich der Hauptkolben 2 abwärts und bewirkt hierdurch die Auffüllung des Zylinderraums durch eine Ansaugung einer brennbaren Mischung. Hierbei wird der Hilfskolben 8 von der Feder 16 in oberer Position gehalten und liegt hierdurch mit der Gabel 10 am zylindrischen Teil des Nockens 11 an.

In dem nachfolgenden Kompressionstakt entsteht ein relativ
großer Kompressionsraum, wie in Pos. c dargestellt ist, da
der Hilfskolben 8 immer noch in oberster Position steht.
Während der nachfolgenden Abwärtsbewegung des Hauptkolbens
2 wird dieser vom Hilfskolben 8 verfolgt, der sich jedoch
mit höherer Geschwindigkeit als der Hauptkolben 2 bewegt,
so daß hierdurch der Kompressionsraum weiter vermindert
wird. Aufgrund der nun bewirkten Zündung des brennbaren
Gemisches wird in dieser Position der Hauptkolben 2 mit
dem vollen Explosionsdruck des brennenden Gemischs beaufschlagt. In dieser Lage nimmt die Kurbelwelle 4 einen
günstigen Drehwinkel ein und es erfolgt vom Hauptkolben 2
eine günstige Kraftübertragung über die Pleuelstange 3 auf
die Kurbelwelle 4. Es sei bemerkt, daß der Motor, falls
dies gewünscht ist, mit einer Zündeinrichtung, z.B. einer
Zündkerze, ausgestattet sein kann.

In der Position e ist der Hauptkolben 2 seinen gesamten
Arbeitsweg abgefahren und befindet sich im unteren
Totpunkt. In dieser Lage befindet sich der Hilfskolben 8
ebenfalls in seiner tiefsten Position. In der nachfolgenden Position f schiebt der Hauptkolben alle verbrannten
Gase aus dem Zylinder 1 hinaus. Dies gelingt vollständig,
da die Kopffläche des Hauptkolbens 2 in Kontakt kommt mit
der unteren Fläche des Hilfskolbens 8. Der nächste
Arbeitszyklus kann nun beginnen.

Der Einlaß und Auslaß des zu verbrennenden Mediums bzw.
des verbrannten Gases kann in üblicher Weise bewirkt
werden und ist nicht Gegenstand dieser Erfindung. Figur 2
zeigt lediglich schematisch eine Einlaßöffnung mit dem
zugeordneten Ventil 17. Dieses Ventil 17 kann in üblicher
Weise betätigt werden durch einen Ventilbetätigungsmechanismus 18 in Abhängigkeit vom Drehwinkel der Kurbelwelle 4.

In Figur 4 ist eine alternative Ausbildung des Motors dargestellt, in welchem der senkrechte Zylinder 1 mit einem hin und her beweglichen Hauptkolben 2 ausgerüstet ist, der über eine Pleuelstange 3 mit der im Kurbelgehäuse 5 gelagerten Kurbelwelle 4 verbunden ist. Der Zylinder 1 ist an seiner Oberseite verlängert, also an der Seite des Kolbens 2 die der Kurbelwelle abgewandt ist, durch einen Raum 19 in welchem ein Hilfskolben 8' hin und her beweglich angeordnet ist. Der Hilfskolben 8' kann ebenfalls betätigt werden durch einen Nocken 11, dessen Drehung abhängig ist von der Drehposition der Kurbelwelle 4. Der Nocken arbeitet zusammen mit einm gabelförmigen Ende eines Kipphebels 21 dessen anderes Ende von einem Kolbenbolzen 22 des Hilfskolbens getragen wird.
Der Vollständigkeit halber sei bemerkt, daß der Kopf des Zylinders 1 mit einer Zündeinrichtung 20 ausgerüstet ist, in Form einer üblichen Zündkerze oder einer ähnlichen Einrichtung. Die Art und Weise des Betriebes entspricht im wesentlichen der Betriebsweise des Motors nach den Figuren 1 und 2, obgleich die Hubbewegung des Kolbens 8' wegen des kleineren Durchmessers etwas länger sein muß, was bei der Länge des Kipphebels 21 beachtet werden muß.

Die Figuren 5 und 6 zeigen Einzelheiten des Steuernockens 11 und der hiermit zusammenarbeitenden Gabel 10. Beide Teile weisen eine radiale oder mindestens im wesentlichen radial gerichtete Anschlagfläche 23 und 24, auf über welche die jeweilige Rotationsgeschwindigkeit des Nockens 11 in der zur Durchführung des vorbeschriebenen Verfahrens notwendigen Weise als Hubbewegung auf den Hilfskolben 8 übertragen wird, so daß das vorkomprimierte Gemisch sehr schnell weiter verdichtet wird.

Bei weiterer Drehung des Nockens 11 kommt die Oberfläche

dieses Nockens 11 zur Anlage an der Oberfläche 26 der
Gabel. Es handelt sich hier um im wesentlichen zylindrische Oberflächenbereiche, wodurch eine Anlage auf großer
Fläche erreicht wird, mit der die aus der Verbrennung oder
Explosion herrührende Rückkraft auf den Hilfskolben sicher
aufgefangen werden kann.
Bei weiterer Drehung des Nockens 11 in Richtung der
Oberfläche 27 der Gabel bewegt sich der Hauptkolben aus
der Position b in die Position c nach Figur 3. Der
Hilfskolben 8 ist hierbei nach oben zurückgezogen, so daß
ein optimaler Hubraum vorliegt.

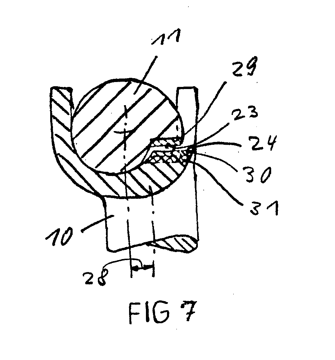

Die Erfahrung hat gezeigt, daß das erfindungsgemäße
Verfahren, betrieben mit dem hier beschriebenen erfindungsgemäßen Motor, ausgezeichnet geeignet ist für die
Verbrennung von Kohlenstaub. Ebenso werden hervorragende
Ergebnisse erzielt bei der Verwendung eines Gemisches von
Kohlenstaub mit Methan oder anderen gasartigen Treibstoffen. Mit den genannten Brennstoffen kann der erfindungsgemäße Motor bei Durchführung des erfindungsgemäßen
Verfahrens betrieben werden, ohne daß das bekannte nachteilige Klopfen oder das typische Diesel-Nageln auftritt.
Bei der Verbrennung von reinem Kohlenstaub wurde festgestellt daß dieser so vollständig verbrennt, daß keine
Aschereste im Zylinder zurückbleiben.
Natürlich ist die Durchführung des erfindungsgemäßen
Verfahrens nicht auf den hier beschriebenen erfindungsgemäßen Motor beschränkt.
So ist z.B. eine konstruktive Variation des Nockens und
der Gabel dargestellt in Figur 7. In Figur 7 ist zur
Verringerung eines Kippmomentes der Schaft der Gabel 10 um
einen Betrag 28 seitlich in Richtung auf die Anschlagfläche 24 zu versetzt. Weiterhin sind die Anschlagflächen
23 und 24 als Oberflächen an austauschbaren Auflagen 29
bzw. 30 ausgebildet, so daß die genannten Auflagen bei
Auftreten von Verschleiß ausgetauscht werden können.

Weiterhin ist es möglich, wie in Figur 7 dargestellt, beispielsweise unter der austauschbaren Auflage 30 eine elastische Unterlage 31 vorzusehen, die verschleißmindernd und stoßdämpfend wirkt. Natürlich ist es ebenso möglich eine solche elastische Unterlage auch unter der austauschbaren Auflage 29 vorzusehen.

Mit dem erfindungsgemäßen Verfahren, angewendet auf den erfindungsgemäßen Motor, wird es erstmals möglich problemlos unterschiedlichste Treibstoffqualitäten einschl. fester Treibstoffe in Pulverform zu verwerten, ohne daß Klopfen oder Nageln auftritt und es wird gleichzeitig die Zündung des zu verbrennenden Gemisches bei optimaler Kompression in den Bereich eines hierfür günstigen Kurbelwellendrehwinkels gelegt, so daß ein hohes Drehmoment erreicht wird und dennoch ein Leistungsverlust durch große Kompressionsarbeit während des Aufwärtshub verhindert werden kann, weil die gewünschte Kompression für die Zündung erst während des nachfolgenden Abwärtshubes des Hauptkolbens erzeugt wird. Vorteilhafterweise kann somit der nach dem erfindungsgemäßen Verfahren betriebene Motor ein langsam laufender Motor mit ungewöhnlich großem Drehmoment sein. Wegen der vollständigen Entleerung des Zylinders während des Ausschiebehubes wird beim nachfolgenden Arbeitstakt eine saubere Verbrennung mit geringen Schadstoffanteilen erreicht, wodurch ein nach dem erfindungsgemäßen Verfahren betriebener Motor umweltfreundlich arbeitet.

0128539

Liste der verwendeten Bezugszeichen

1    Zylinder

2    Hauptkolben

3    Pleuelstange

4    Kurbelwelle

5    Kurbelgehäuse

6    Brennkammer

7    Raum

8    Hilfskolben

8'   Hilfskolben

9    Kolbenringe

10   Gabel

11   Nocken

12   Welle

13   Zahnrad

14   endloses Element

15   Zahnrad

16   Druckfeder

17   Ventil

18   Ventilbetätigungsmechanismus

19   Raum

20   Zündeinrichtung

21   Kipphebel

22   Kolbenbolzen

23   Anschlagfläche

24   Anschlagfläche

25   Oberfläche

26   Oberfläche

27   Oberfläche

28   Betrag

29   austauschbare Auflage

30   austauschbare Auflage

31   elastische Unterlage

<u>Schutzansprüche</u>

1. Viertaktarbeitsverfahren für den Betrieb eines Verbrennungsmotors mit einem über eine Pleuelstange mit einer Kurbelwelle verbundenen Hauptkolben und mit einem über einen beweglichen Hilfskolben in seinem Volumen veränderbaren Kompressionsraum, wobei auf eine Zündung eine Expansionsphase folgt, der sich eine Ausstoßphase, gefolgt von einer Ansaugphase, anschließt, auf welche vor einer neuerlichen Zündung eine Kompressionsphase folgt, dadurch gekennzeichnet, daß am Ende der Ausstoßphase und spätestens im oberen Totpunkt des Hauptkolbens der Kompressionsraum vom Hilfskolben wenigstens angenähert zu Null gemacht und während der nachfolgenden Ansaugphase bis spätestens zum unteren Totpunkt des Hauptkolbens maximiert wird, wobei bei nachfolgender Kompressionsphase im oberen Totpunkt des Hauptkolbens dieser mit dem Hilfskolben einen Kompressionsraum einschließt, der während des nachfolgenden Abwärtshubes bis zu einem gewünschten Drehwinkel der Kurbelwelle rasch bis auf eine gewünschte Größe verkleinert wird, bevor die Zündung erfolgt.

2. Kolbenmotor zur Durchführung des Verfahrens nach Anspruch 1 im wesentlichen bestehend aus mindestens einem Zylinder mit einem darin bewegbaren Hauptkolben, einer Kurbelwelle und einer zwischen Hauptkolben und Kurbelwelle angeordneten Pleuelstange, wobei in einem Verlängerungsteil des Zylinders ein von einem Mechanismus abhängig von der Kurbelwellenlage gesteuerter Hilfskolben an der von der Kurbelwelle abgekehrten Seite des Hauptkolbens angeordnet ist, zur Bildung eines Verbrennungsraumes zwischen beiden Kolben, der in Verbindung mit einer Ein- bzw. Auslaßöffnung für die Zu- bzw. Abfuhr eines Brennmediums bzw. Abgases steht, dadurch gekennzeichnet, daß der Steuermechanismus besteht aus einer in geeigneter Übersetzung zur Kurbelwelle (4) und von dieser angetriebenen Nockenwelle (11,12) mit je Hilfskolben (8,8') einem Nocken (11), welcher zusammenarbeitet mit einem gabelförmigen Nockenfolger (10), wobei Nocken (11) und Gabel (10) je eine sich wenigstens angenähert radial erstreckende Anschlagfläche (23,24) aufweisen.

3. Kolbenmotor zur Durchführung eines Viertaktarbeitsverfahrens im wesentlichen bestehend aus mindestens einem Zylinder mit einem darin bewegbaren Kolben, einer Kurbelwelle und einer zwischen Kolben und Kurbelwelle angeordneten Pleuelstange sowie mindestens einem in Abhängigkeit von der Kurbelwellenlage gesteuerten, nockenbetätigten Ventil, dadurch gekennzeichnet, daß der Nocken zusammenarbeitet mit einem am Ventilschaft angeordneten gabelförmig ausgebildeten Nockenfolger, wobei Nocken und Gabel je eine sich wenigstens angenähert radial erstreckende Anschlagfläche (23, 24) aufweisen.

4. Motor nach mindestens einem der Ansprüche 2 und 3, dadurch gekennzeichnet, daß die Anschlagflächen (23, 24) derart angeordnet sind, daß diese im oberen Totpunkt des Hauptkolbens (2) oder danach aufeinander stoßen.

5. Motor nach mindestens einem der Ansprüche 2 bis 4, dadurch gekennzeichnet, daß der Schaft der Gabel (10) seitlich um einen Betrag (28) zur Anschlagfläche (24) hin versetzt angeordnet ist, zur Verringerung des Kippmomentes.

6. Motor nach mindestens einem der Ansprüche 2 bis 5 dadurch gekennzeichnet, daß mindestens eine der Anschlagflächen (23, 24) an einer austauschbaren Auflage (29,30) ausgebildet ist.

7. Motor mindestens nach Anspruch 6, dadurch gekennzeichnet, daß mindestens die Auflage (30) auf einer elastischen Unterlage (31) angeordnet ist.

FIG.1

FIG.2

FIG.4

FIG.6

FIG.3

FIG.5

FIG 7